# EUROPÄISCHE PATENTSCHRIFT

(11) **EP 3 748 156 B1**
(45) Veröffentlichungstag und Bekanntmachung des Hinweises auf die Patenterteilung: **11.08.2021**
(21) Anmeldenummer: 20187961.6
(22) Anmeldetag: 22.11.2019
(51) Int. Cl.: F04B 13/00, F04B 43/02, F04B 53/06, F04B 53/10

(54) **VENTILEINSATZ FÜR EINE DOSIERPUMPE**
VALVE INSERT FOR A DOSING PUMP
INSERT DE SOUPAPE POUR UNE POMPE DE DOSAGE

(30) Priorität: 20.12.2018 DE 102018133214; 25.07.2019 DE 202019104111 U
(43) Veröffentlichungstag der Anmeldung: 09.12.2020
(62) Teilanmeldung aus: 19210957.7
(73) Patentinhaber: Lutz-Jesco GmbH, 30900 Wedemark (DE)
(72) Erfinder: Roth, Steffen, 97904 Dorfprozelten (DE); Militzer, Peter Bernard, 68800 Roderen (FR)
(74) Vertreter: Christ, Niko

(56) Entgegenhaltungen:
- WO-A1-95/13473
- CH-A- 457 146
- DE-C1- 3 827 489
- DE-C1- 19 712 096

## Beschreibung

Die vorliegende Erfindung betrifft einen Ventileinsatz für eine Dosierpumpe, umfassend ein Saugventil und ein diesem in Förderrichtung unmittelbar nachgeschaltetes, Überströmventil, welches zwischen einer Sperrposition und einer Freigabeposition verschieblich ist und in der Sperrposition den Zulauf zu einer aus dem Ventileinsatz herausführenden Überströmleitung verschließt und in der Freigabeposition eröffnet.

Eine derartige Dosierpumpe ist bereits aus der CH 457 146 A vorbekannt. Weiter ist in diesem Zusammenhang auf die DE 38 27 489 C1 hinzuweisen.

Derartige Dosierpumpen stellen bereits seit Langem gängigen Stand der Technik dar. Sie werden immer dann bevorzugt eingesetzt, wenn aggressive Chemikalien leckagefrei dosiert werden sollen, eine hohe Wiederholgenauigkeit gefordert ist und gegen hohe Drücke gepumpt werden muss. Aufgrund der Aggressivität der Chemikalien, die unter hohem Druck dosiert werden, wird immer häufiger geeignetes Sicherheitszubehör verlangt, um im System entstehende kritische Überdrücke zu vermeiden. Hierbei hat das Sicherheitszubehör die Aufgabe, entweder den Druck zu überwachen, oder diesen bei Erreichen eines Druckgrenzwerts zu reduzieren.

Die Drucküberwachung kann insbesondere durch den Einbau eines Drucksensors in den Dosierkopf, die Saugleitung, die Druckleitung oder direkt in den der Dosierpumpe nachgeschalteten Prozess erfolgen. Hierbei werden Sensoren und zusätzlich eine Auswerteelektronik benötigt. Die Auswerteelektronik kann in einem Pumpengehäuse mit aufgenommen sein oder mit einer Prozesssteuerung in einem entfernten Schaltschrank. In jedem Fall muss sie aber mit den Sensoren datenverbunden sein und die Pumpe in Abhängigkeit von den Sensorwerten steuern. Diese Art der Überwachung ist sehr kostspielig und erfordert einen hohen Montageaufwand.

Eine mechanische Druckbegrenzung hingegen kann mittels eines Überströmventils umgesetzt werden. Hierbei wird ein zusätzliches Ventil auf den Dosierkopf oder in die Druckleitung eingebaut. Über eine Stellschraube kann eine Feder im Inneren des Ventils vorgespannt, und mit dieser der Betriebsdruck und ein Druckgrenzwert eingestellt werden. Die Federkraft entspricht somit dem Öffnungsdruck.

Im Normalzustand strömt dann von der Dosierpumpe gefördertes Medium durch das Ventil. Steigt nun der Druck an dem Ventil, also in der Druckleitung oder dem Dosierkopf an, so öffnet eine Membran einen Überströmkanal, der das Medium zurück in einen Medienbehälter oder in einen separaten Auffangbehälter leitet. Fällt der Druck daraufhin wieder ab, schließt die Membran den Überströmkanal wieder und das Medium strömt weiter in Richtung Prozess. Diese Lösung sieht jedoch vor, dass in dem Dosierkopf oder bereits in der Druckleitung zunächst ein sehr großer Druck entsteht. Neben dem sich hierdurch einstellenden erhöhten Verschleiß benötigt die Anordnung eines zusätzlichen Armaturblocks mit dem genannten Überströmventil zusätzlichen Bauraum und zusätzliche Leitungen zu dem Armaturenblock und von diesem weg.

Vor diesem Hintergrund liegt der vorliegenden Erfindung die Aufgabe zu Grunde, eine Lösung anzugeben, bei welcher ein Überdruck in der Druckleitung vermieden und entstehende kritische Überdrücke direkt am oder im Dosierkopf abgebaut werden können.

Gelöst wird diese Aufgabe durch einen Ventileinsatz für eine Dosierpumpe gemäß den Merkmalen des unabhängigen Anspruchs 1.

Erfindungsgemäß ist es vorgesehen, dass einer Dosierpumpe im Bereich ihres Dosierkopfs, neben dem für die Funktion benötigten Saugventil und Druckventil ein Überströmventil zugeordnet ist, über das sich ein kritischer Überdruck im Dosierkopf abbauen kann. Im Fall des Erreichens eines oberen Druckgrenzwerts im Dosierkopf lösen Mittel zum Öffnen einer Überströmleitung aus und eröffnen einen Zugang zu dieser Überströmleitung, welche aus dem Dosierkopf hinausführt. Hierdurch sinkt im Anschluss an die Öffnung der Überströmleitung der Druck im Dosierkopf unterhalb des oberen Druckgrenzwerts und eine Beschädigung der Dosierpumpe kann hierdurch vermieden werden.

In einer Variante der Erfindung kann sich das Überströmventil konkret zwischen Saugventil und Druckventil befinden.

Dies ist deshalb besonders vorteilhaft, weil durch diese Anordnung der Druck direkt am Ort des Entstehens wieder abgesenkt werden kann, während bei dem bekannten Stand der Technik der Druck erst in dem separaten Armaturenblock abgebaut werden kann. Bei dem bekannten Stand der Technik verbleibt der Druck also im Dosierkopf und es kommt trotz der Entlastung in der Druckleitung bei den überhöhten Druckverhältnissen im Dosierkopf.

Die Überströmleitung ihrerseits kann auf der von dem Dosierkopf abgewandten Seite des vorzugsweise mit der Saugleitung verbunden oder identisch sein, welche den Dosierkopf speist, so dass das Medium den Förderkreislauf nicht erst verlässt. Alternativ kann die Überströmleitung aber auch mit einem Behälter verbunden sein, etwa einem Überlaufbehälter oder direkt zurück in den mit der Saugleitung verbundenen Medienbehälter führen.

Es hat sich als besonders vorteilhaft erwiesen, wenn das Überströmventil in der unmittelbaren Umgebung mit dem Saugventil angeordnet wird. Beim Ausfördern von Medium aus dem Dosierkopf wird das Saugventil, beispielsweise in Form eines Kugelventils ohnehin geschlossen, so dass im Zuge dieser Rücksetzbewegung auch die Mechanik eines Überströmventils angeordnet werden kann. In diesem Fall ist das Überströmventil in Förderrichtung nach dem Saugventil anzuordnen, so dass es nach dem Schließen des Saugventils noch dem Druck in dem Dosierkopf ausgesetzt ist. Wird dann die Überströmleitung eröffnet, welche in einer dem Überströmventil benachbarten Gehäusewand mündet, so kann das überströmende Medium über die Überströmleitung aus dem Dosierkopf abgeleitet werden.

In dieser Konfiguration kann das Überströmventil ferner das Saugventil von dem Inneren des Dosierkopfes trennen, so dass folglich dem Überströmventil eine Durchlassöffnung zugeordnet sein muss, durch welche beim Ansaugen von Medium dieses Medium hindurchgefördert werden kann.

In konkreter Ausgestaltung des Überströmventils ist dieses als Tellerventil ausgeführt, wobei der Ventilteller mit der genannten Durchlassöffnung in dem Weg zwischen dem Saugventil und der Dosierkammer des Dosierkopfs angeordnet ist. Eine Randaufwölbung des Ventiltellers blockiert dann den Zugang zu der Überströmleitung, so lange der Ventilteller in einer Sperrposition verharrt. Aus dieser Sperrposition wird der Ventilteller nur dann gegen die Kraft einer Druckfeder in eine Freigabeposition verschoben, wenn der Druck in dem Dosierkopf den oberen Druckgrenzwert übersteigt. Für diesen Fall kann auch die Durchlassöffnung des Tellerventils ein Rückschlagventil aufweisen, um unterschiedliche Druckpotenziale beiderseits des Ventiltellers aufbauen zu können.

Zur Beeinflussung des oberen Druckgrenzwerts kann ferner mit einigem Vorteil die Druckfeder mithilfe von Einstellmitteln, vorzugsweise von außerhalb des Dosierkopfs, beeinflussbar sein, so dass mithilfe der Einstellmittel die Federkonstante geändert werden kann. Hierdurch kann angepasst werden, welcher Druck als oberer Druckgrenzwert angesetzt wird und bei welchem Druck das Überströmventil den Zugang zur Überströmleitung eröffnet.

Die Überströmleitung ihrerseits ist auf der von dem Dosierkopf abgewandten Seite vorzugsweise mit der Saugleitung verbunden, welche den Dosierkopf speist, so dass das Medium den Förderkreislauf nicht erst verlässt. Alternativ kann die Überströmleitung aber auch mit einem Behälter verbunden sein, etwa einem Überlaufbehälter oder direkt zurück in den mit der Saugleitung verbundenen Medienbehälter.

Das Saugventil ist dem Dosierkopf in Form eines Ventileinsatzes als Ganzes, beispielsweise über eine Schraubverbindung, zugeordnet. Das Überströmventil ist diesem Ventileinsatz mit zugeordnet, so dass der Ventileinsatz sowohl das Saugventil als auch das mit diesem vorzugsweise verbundene Überströmventil aufnimmt. Hierdurch ist es möglich, das Überströmventil unproblematisch in bestehende Dosierpumpen nachzurüsten, ohne dass größere bauliche Veränderungen an der Dosierpumpe vorgenommen werden müssten.

Die vorstehend beschriebene Erfindung wird im Folgenden anhand eines Ausführungsbeispiels näher erläutert.

Es zeigen
- Figur 1: die Saugseite des Dosierkopfs einer Dosierpumpe mit einem Saugventil gemäß dem bekannten Stand der Technik in einer Querschnittsdarstellung,
- Figur 2: die Saugseite des Dosierkopfs einer erfindungsgemäßen Dosierpumpe mit einem Ventileinsatz mit Überströmventil in einer Querschnittsdarstellung, sowie
- Figur 3: eine Variante der Saugseite des Dosierkopfs gemäß Figur 2 mit einem Ventileinsatz mit Überströmventil in einer Querschnittsdarstellung.

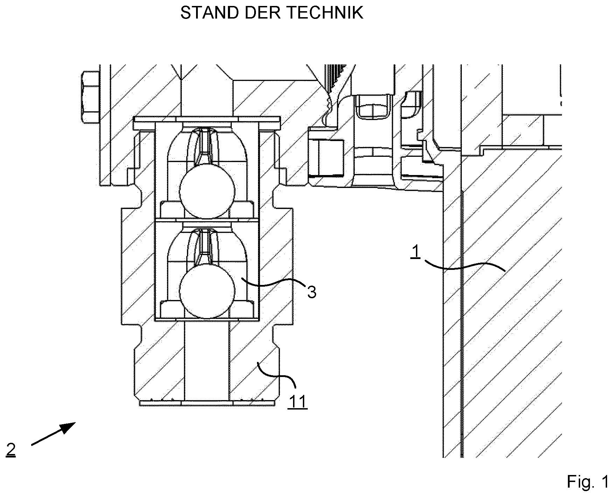

Figur 1 zeigt einen Dosierkopf 2 einer Dosierpumpe 1 wie sie im Stand der Technik bekannt sind. Gezeigt ist ein Detail der Saugseite des Dosierkopfs 2, welche einen Ventileinsatz 11 aufweist, der dem Dosierkopf 2 über eine Schraubverbindung anverbunden ist. Über eine hier nicht dargestellte Saugleitung wird Medium aus einem Medienbehälter mithilfe einer Membran in den Dosierkopf 2 eingesaugt, wobei der Ventileinsatz 11 hier ein als zweistufiges Kugelventil ausgeführtes Saugventil 3 aufweist. Der im Dosierkopf 2 herrschende Unterdruck, der durch die hier nicht gezeigte Membran erzeugt wird, öffnet die hintereinandergeschalteten Kugelventile und lässt das angesaugte Medium in den Dosierkopf 2 einströmen. Sodann wird die Membran nach Erreichen einer Endlage den Druck im Dosierkopf 2 wieder erhöhen, wodurch die Kugelventile schließen und das Medium über ein druckseitig angeordnetes, analoges aber in umgekehrter Richtung angeordnetes Druckventil ausgefördert wird. Wird der Druck in der Druckleitung zu groß, so wird dann ein dort gegebenenfalls eingesetztes Überströmventil auslösen und für eine Absenkung des Druckes in der Druckleitung sorgen. In dem Dosierkopf 2 hingegen bleibt ein zu hoher Druck in einem solchen Fall bestehen.

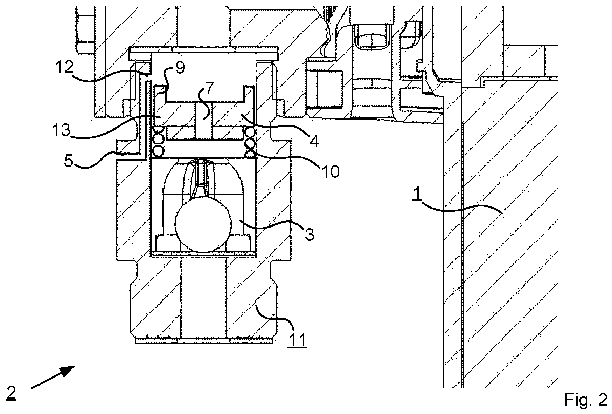

Figur 2 zeigt die erfindungsgemäße Lösung, die sich durch den eingesetzten Ventileinsatz 11 vom Stand der Technik abhebt. Der Ventileinsatz 11 weist weiterhin ein zweistufiges Ventil auf, wobei aber nur die in Strömungsrichtung erste, also außen liegende Ventilstufe als Saugventil 3, hier in Form eines Kugelventils, ausgestaltet ist. Die innenliegende Ventilstufe ist als Überströmventil 4 ausgestaltet und verschließt in einer Sperrposition eine Überströmleitung 5, deren Zugang 12 in der gezeigten Freigabeposition für in dem Dosierkopf 2 enthaltenes Medium zugänglich ist.

Das Überströmventil 4 ist als Tellerventil aufgebaut, dessen Ventilteller 13 eine mittige Durchlassöffnung aufweist, durch welche in der Sperrposition das von dem Saugventil kommende Medium hindurchgefördert werden kann, welche aber in hier nicht gezeigter Art und Weise seinerseits mit einem Rückschlagventil versehen sein kann. Baut sich in dem Dosierkopf 2 ein Druck auf, welcher einen oberen Druckgrenzwert erreicht, so schließt nicht nur das Saugventil 3, sondern das Überströmventil 4 eröffnet die Überströmleitung 5. Hierzu wird der Ventilteller 13 aufgrund des Druckes in dem Dosierkopf 2 gegen die Kraft der Druckfeder 10, welche den oberen Druckgrenzwert bestimmt, in die Freigabeposition verschoben. Eine Randaufwölbung 9 des Ventiltellers 8, welche bis dahin den Zugang 12 zu der Überströmleitung 5 versperrt hatte, rückt dabei von dem Zugang 12 weg und das Medium kann zusätzlich zum Druckventil auch über die Überströmleitung aus dem Dosierkopf 2 heraus, etwa zurück in die Saugleitung oder den Medienbehälter, geführt werden, so dass sich der Druck im Dosierkopf wieder abbauen kann.

Vorstehend beschrieben ist somit ein Ventilsitz für eine Dosierpumpe, bei welcher ein Überdruck in der Druckleitung vermieden und entstehende kritische Überdrücke direkt am oder im Dosierkopf abgebaut werden können. Dies erfolgt durch ein dem Saugventil direkt vor- oder nachgeschaltetes Überströmventil, welches bei Erreichen eines Druckgrenzwerts Medium direkt aus dem Dosierkopf herausleitet und den Druck hierdurch unmittelbar wieder unter den Druckgrenzwert absenkt.

### BEZUGSZEICHENLISTE

- 1: Dosierpumpe
- 2: Dosierkopf
- 3: Saugventil
- 4: Überströmventil
- 5: Überströmleitung
- 7: Durchlassöffnung
- 9: Randaufwölbung
- 10: Druckfeder
- 11: Ventileinsatz
- 12: Zugang
- 13: Ventilteller

## Patentansprüche

1. Ventileinsatz für eine Dosierpumpe, umfassend ein Saugventil (3) und ein diesem in Förderrichtung unmittelbar nachgeschaltetes, Überströmventil, welches zwischen einer Sperrposition und einer Freigabeposition verschieblich ist und in der Sperrposition den Zulauf (6) zu einer aus dem Ventileinsatz (11) herausführenden Überströmleitung (5) verschließt und in der Freigabeposition eröffnet,
**dadurch gekennzeichnet, dass** das Überströmventil (4) als Tellerventil ausgeführt ist, wobei ein eine Durchlassöffnung (7) für durch das Saugventil (3) angesaugtes Medium aufweisender Ventilteller (13) gegen eine Druckfeder (10) verschieblich ist und eine von dem Saugventil (3) abgewandte Randaufwölbung (9) zum Verschluss der Überströmleitung (5) aufweist.

## Claims

1. Valve insert for a metering pump, comprising a suction valve (3) and an overflow valve immediately downstream thereof in the conveying direction, which overflow valve can be moved between a blocking position and a release position and in the blocking position said overflow valve closes the inlet (6) to an overflow line (5) leading out of the valve insert (11) and opens said inlet in the release position,
**characterized in that** the overflow valve (4) is designed as a poppet valve, it being possible for a valve head (13), which has a passage opening (7) for medium sucked in through the suction valve (3), to be moved against a compression spring (10) and said valve head comprising an edge bulge (9), which faces away from the suction valve (3), for closing the overflow line (5).

## Revendications

1. Insert de soupape destiné à une pompe doseuse, comprenant une soupape d'aspiration (3) et une soupape de trop-plein immédiatement en aval de celle-ci dans le sens de transport, laquelle soupape de trop-plein peut coulisser entre une position de blocage et une position de libération et ferme, en position de blocage, l'entrée (6) à une conduite de trop-plein (5) sortant de l'insert de soupape (11) et l'ouvre en position de libération,
**caractérisé en ce que** la soupape de trop-plein (4) est conçue comme une soupape en champignon, un champignon de soupape (13), présentant une ouverture de passage (7) destinée au fluide aspiré par la soupape d'aspiration (3), pouvant coulisser contre un ressort de compression (10) et présentant un renflement de bord (9) opposé à la soupape d'aspiration (3) et permettant de fermer la conduite de trop-plein (5).
